# EUROPEAN PATENT APPLICATION

(11) **EP 4 561 041 A1**
(43) Date of publication of application: **28.05.2025**
(21) Application number: 23925033.5
(22) Date of filing: 29.11.2023
(51) Int. Cl.: H04M 1/725, G06F 3/0484

(54) **APPLICATION PERMISSION MANAGEMENT AND CONTROL METHOD BASED ON SYSTEM CONTROL, AND ELECTRONIC DEVICE**

(30) Priority: 28.02.2023 CN 202310224187
(71) Applicant: Huawei Technologies Co., Ltd., Shenzhen, Guangdong 518129 (CN)
(72) Inventor: ZHANG, Jian, Shenzhen, Guangdong 518129 (CN)
(74) Representative: Goddar, Heinz J.
(86) International application number: PCT/CN2023/135045
(87) International publication number: WO 2024/179086

(57) **Abstract**

This application discloses a system control-based application permission control method and an electronic device. A system control is displayed on an interface of an application. A user operates the system control, so that an operating system of the electronic device grants permission to the system control, to obtain information in place of the application. The application does not directly obtain the permission and the information from the operating system of the electronic device. It can be learned that, when the application is run, the electronic device does not need to prompt, in a form of pop-up window, the user to grant the permission to the application. In view of this, the application does not directly obtain permission that carries related information of the user. On this basis, the application does not excessively use the permission to obtain the related information. This ensures information security and controllability.

## Description

This application claims priority to Chinese Patent Application No. 202310224187.2, filed with the China National Intellectual Property Administration on February 28, 2023 and entitled "SYSTEM CONTROL-BASED APPLICATION PERMISSION CONTROL METHOD AND ELECTRONIC DEVICE", which is incorporated herein by reference in its entirety.

### TECHNICAL FIELD

This application relates to the field of information security technologies, and in particular, to a system control-based application permission control method and an electronic device.

### BACKGROUND

To meet a user requirement, more applications (apps for short) are installed on an electronic device. These applications prompt, in a form of pop-up window, a user to grant permission to the applications, for example, grant access permission for personal privacy information (such as contact information, gallery information, and location information). When the user grants the access permission for the personal privacy information to the applications in an unaware manner, the applications may excessively obtain the personal privacy information of the user, which causes a security risk.

### SUMMARY

Embodiments of this application provide a system control-based application permission control method and an electronic device, to effectively prevent an application from excessively obtaining personal privacy information of a user.

To achieve the foregoing objectives, the following technical solutions are used in embodiments of this application.

According to a first aspect, an embodiment of this application provides a system control-based application permission control method. The method may be performed by an electronic device, or may be performed by a component (for example, a chip, a chip system, or a processor) in the electronic device. The following uses an example in which the method is performed by the electronic device for description. The method includes the following steps. The electronic device displays a first interface of an application, where the first interface includes a system control. The application is run in a first process, the system control is run in a second process, and the second process and the first process are two different processes. The electronic device receives a first operation on the system control. In response to the first operation, the electronic device obtains first information corresponding to the system control. The electronic device sends the first information to the application.

The application may be understood as a third-party application, and the foregoing application may also be understood as some system applications that can be uninstalled by a user.

The system control may replace/cover a first application control with a same function on a display interface of the application.

The first information may be understood as privacy information of the user, for example, mobile number, bank card number, and location information of the user. The first information may also be understood as an analysis result obtained after analysis is performed based on the privacy information of the user, for example, a recognition result of a payment QR code of the user.

In this way, the system control is displayed on the interface of the application. The user operates the system control, so that an operating system of the electronic device grants permission to the system control, to obtain information in place of the application. The application does not directly obtain the permission and the information from the operating system of the electronic device. It can be learned that, when the application is run, the electronic device does not need to prompt, in a form of pop-up window, the user to grant the permission to the application. In view of this, the application does not directly obtain permission that carries related information of the user. On this basis, the application does not excessively use the permission to obtain the related information. This ensures information security and controllability.

In addition, the electronic device does not need to prompt, in a form of pop-up window on the interface of the application, the user to grant the permission to the application. This effectively avoids interference, to the user, caused by displaying a window a plurality of times. In addition, an operation event of the user on the system control is directly transmitted to the operating system of the electronic device, and the operating system of the electronic device processes the operation event (for example, performs filtering, security verification, and the like on the operation event), so that the operation event is not processed by the application. This avoids a case in which the application forges the operation event, and improves control security.

It should be understood that, for a same installation package of the application, when the installation package is installed on a device A that supports a system control function, after a corresponding interface of the application is opened on the device A, a system control may be displayed on the interface. The device A may provide corresponding information for the application based on an operation performed by the user on the system control. When the installation package is installed on a device B that does not support a system control function, after a corresponding interface of the application is opened on the device B, a corresponding application control may be displayed on the interface. Alternatively, the device B does not display the corresponding application control, and displays the background of the application in an area corresponding to a system control.

In a design solution, before the electronic device receives the first operation on the system control, the method further includes: The electronic device receives a first request sent by the application, where the first request is used to request to load the system control, the first request carries attribute information of the first application control corresponding to the system control, and the first application control is a control that is in the application and that is used to trigger obtaining of the first information. The electronic device displays a first window based on the attribute information of the first application control, where the system control is displayed in the first window.

In a design solution, that the electronic device obtains first information corresponding to the system control may be specifically: The electronic device verifies permission of the system control; and the electronic device obtains the first information when the permission of the system control passes.

In a design solution, the attribute information of the first application control includes at least one of the following: size information of the control, a style of the control, a type of the control, a life cycle of the control, and location information of the control.

In a design solution, a life cycle of the system control is determined based on a life cycle of the application.

In a design solution, that the electronic device obtains the first information in response to the first operation may be specifically implemented as follows: In response to the first operation, the electronic device performs validity verification on an operation event corresponding to the first operation. After determining that the operation event is a validity event, the electronic device obtains first permission based on attribute information of the operation event, where the first permission is permission for obtaining the first information. The electronic device obtains the first information based on the first permission.

In a design solution, the system control may include a location system control, the first interface includes an address input box, and a specific implementation may be as follows: The electronic device displays a second interface in response to an operation on the location system control, where a plurality of addresses are displayed on the second interface. In response to an operation on a first address in the plurality of addresses, the electronic device displays the first address in the address input box.

In a design solution, the system control may include a location system control, the first interface includes an address input box, and a specific implementation may be as follows: The electronic device displays a third interface in response to an operation on the location system control, where a map is displayed on the third interface. In response to an operation on a first location on the map, the electronic device displays information about the first location in the address input box.

In a design solution, the first interface further includes a second application control. The method further includes: The electronic device displays an authorization interface in response to an operation on the second application control, where the authorization interface includes authorization information and a confirmation control. In response to an operation on the confirmation control, the electronic device grants permission corresponding to the authorization information to the application.

According to a second aspect, an embodiment of this application provides an electronic device. The electronic device may include a display module, a first receiving module, an obtaining module, and a sending module. The display module is configured to display a first interface of an application, where the first interface includes a system control. The application is run in a first process, the system control is run in a second process, and the second process and the first process are two different processes. The first receiving module is configured to receive a first operation on the system control. The obtaining module is configured to: in response to the first operation, obtain first information corresponding to the system control. The sending module is configured to send the first information to the application.

In this way, the system control is displayed on an interface of the application. A user operates the system control, so that an operating system of the electronic device grants permission to the system control, to obtain information in place of the application. The application does not directly obtain the permission and the information from the operating system of the electronic device. It can be learned that, when the application is run, the electronic device does not need to prompt, in a form of pop-up window, the user to grant the permission to the application. In view of this, the application does not directly obtain permission that carries related information of the user. On this basis, the application does not excessively use the permission to obtain the related information. This ensures information security and controllability.

In addition, the electronic device does not need to prompt, in a form of pop-up window on the interface of the application, the user to grant the permission to the application. This effectively avoids interference, to the user, caused by displaying a window a plurality of times. In addition, an operation event of the user on the system control is directly transmitted to the operating system of the electronic device, and the operating system of the electronic device processes the operation event (for example, performs filtering, security verification, and the like on the operation event), so that the operation event is not processed by the application. This avoids a case in which the application forges the operation event, and improves control security.

In a design solution, the electronic device further includes a second receiving module. The second receiving module is configured to receive a first request sent by the application, where the first request is used to request to load the system control, the first request carries attribute information of a first application control corresponding to the system control, and the first application control is a control that is in the application and that is used to trigger obtaining of the first information. The display module is configured to display a first window based on the attribute information of the first application control, where the system control is displayed in the first window.

In a design solution, the obtaining module is configured to: verify permission of the system control; and obtain the first information when the permission of the system control passes.

In a design solution, the attribute information of the first application control includes at least one of the following: size information of the control, a style of the control, a type of the control, a life cycle of the control, and location information of the control.

In a design solution, the system control may include a location system control. The first interface may include an address input box. The display module is configured to display a second interface in response to an operation on the location system control, where a plurality of addresses are displayed on the second interface. The sending module is configured to: in response to an operation on a first address in the plurality of addresses, display the first address in the address input box.

In a design solution, the system control may include a location system control. The first interface may include an address input box. The display module is configured to display a third interface in response to an operation on the location system control, where a map is displayed on the third interface. The sending module is configured to: in response to an operation on a first location on the map, display information about the first location in the address input box.

In a design solution, the first interface further includes a second application control, and the electronic device further includes an authorization module. The display module is configured to display an authorization interface in response to an operation on the second application control, where the authorization interface includes authorization information and a confirmation control. The authorization module is configured to: in response to an operation on the confirmation control, grant permission corresponding to the authorization information to the application.

According to a third aspect, an embodiment of this application provides an electronic device. The electronic device may include a display module and an extension control module. The extension control module includes a window management unit, an obtaining unit, and a sending unit. The display module is configured to display a first interface of an application, where the first interface includes a system control. The application is run in a first process, the system control is run in a second process, and the second process and the first process are two different processes. The window management unit is configured to receive a first operation on the system control. The obtaining unit is configured to: in response to the first operation, obtain first information corresponding to the system control. The sending unit is configured to send the first information to the application.

In this way, the system control is displayed on an interface of the application. A user operates the system control, so that an operating system of the electronic device grants permission to the system control, to obtain information in place of the application. The application does not directly obtain the permission and the information from the operating system of the electronic device. It can be learned that, when the application is run, the electronic device does not need to prompt, in a form of pop-up window, the user to grant the permission to the application. In view of this, the application does not directly obtain permission that carries related information of the user. On this basis, the application does not excessively use the permission to obtain the related information. This ensures information security and controllability.

In addition, the electronic device does not need to prompt, in a form of pop-up window on the interface of the application, the user to grant the permission to the application. This effectively avoids interference, to the user, caused by displaying a window a plurality of times. In addition, an operation event of the user on the system control is directly transmitted to the operating system of the electronic device, and the operating system of the electronic device processes the operation event (for example, performs filtering, security verification, and the like on the operation event), so that the operation event is not processed by the application. This avoids a case in which the application forges the operation event, and improves control security.

In a design solution, the electronic device may further include a control management service module. The control management service module includes a receiving unit and a control creation unit. The extension control module further includes a window creation unit and a loading unit. The receiving unit is configured to receive a first request sent by the application, where the first request is used to request to load the system control, the first request carries attribute information of a first application control corresponding to the system control, and the first application control is a control that is in the application and that is used to trigger obtaining of the first information. The control creation unit is configured to create the system control based on the attribute information of the first application control. The window creation unit is configured to create a first window based on the attribute information of the first application control. The loading unit is configured to display the system control in the first window.

In a design solution, the obtaining module is configured to: verify permission of the system control; and obtain the first information when the permission of the system control passes.

In a design solution, the attribute information of the first application control includes at least one of the following: size information of the control, a style of the control, a type of the control, a life cycle of the control, and location information of the control.

In a design solution, a life cycle of the system control is determined based on a life cycle of the application.

In a design solution, the obtaining unit further includes an event filtering unit and a permission request unit. The event filtering unit is configured to: in response to the first operation, perform security verification on an operation event corresponding to the first operation. The permission request unit is configured to: after it is determined that the operation event is a security event, obtain first permission based on attribute information of the operation event, where the first permission is permission for obtaining the first information.

In a design solution, the obtaining unit may further include an information obtaining unit. The information obtaining unit is configured to obtain the first information based on the first permission.

In a design solution, the system control may include a location system control. The first interface may include an address input box. The display module is configured to display a second interface in response to an operation on the location system control, where a plurality of addresses are displayed on the second interface. The sending module is configured to: in response to an operation on a first address in the plurality of addresses, display the first address in the address input box.

In a design solution, the system control may include a location system control. The first interface may include an address input box. The display module is configured to display a third interface in response to an operation on the location system control, where a map is displayed on the third interface. The sending module is configured to: in response to an operation on a first location on the map, display information about the first location in the address input box.

In a design solution, the first interface further includes a second application control, and the electronic device further includes an authorization module. The display module is configured to display an authorization interface in response to an operation on the second application control, where the authorization interface includes authorization information and a confirmation control. The authorization module is configured to: in response to an operation on the confirmation control, grant permission corresponding to the authorization information to the application.

According to a fourth aspect, an embodiment of this application provides an electronic device. The electronic device includes one or more processors and a memory. The memory stores code, and when the code is executed by the processor, the electronic device is enabled to perform the method according to the first aspect.

According to a fifth aspect, an embodiment of this application provides a computer-readable storage medium, including computer instructions. When the computer instructions are run on an electronic device, the electronic device is enabled to perform the method according to the first aspect.

For specific implementations and corresponding technical effect of embodiments in the second aspect to the fifth aspect, refer to specific implementations and technical effect of the first aspect.

### BRIEF DESCRIPTION OF DRAWINGS

FIG. 1 is a diagram of an interface of an electronic device according to an embodiment of this application;
FIG. 2 is a diagram of another interface of an electronic device according to an embodiment of this application;
FIG. 3 is a diagram of another interface of an electronic device according to an embodiment of this application;
FIG. 4-1 is a diagram of another interface of an electronic device according to an embodiment of this application;
FIG. 4-2 is a diagram of another interface of an electronic device according to an embodiment of this application;
FIG. 5 is a diagram of another interface of an electronic device according to an embodiment of this application;
FIG. 6 is a diagram of a structure of an electronic device according to an embodiment of this application;
FIG. 7 is a diagram of a software architecture of an electronic device according to an embodiment of this application;
FIG. 8 is a diagram of another software architecture of an electronic device according to an embodiment of this application;
FIG. 9 is a diagram of an application scenario of a system control-based application permission control method according to an embodiment of this application;
FIG. 10 is a diagram of a structure of an electronic device according to an embodiment of this application; and
FIG. 11 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Currently, when an electronic device runs an application, the application prompts, in a form of pop-up window, a user to grant permission to the application.

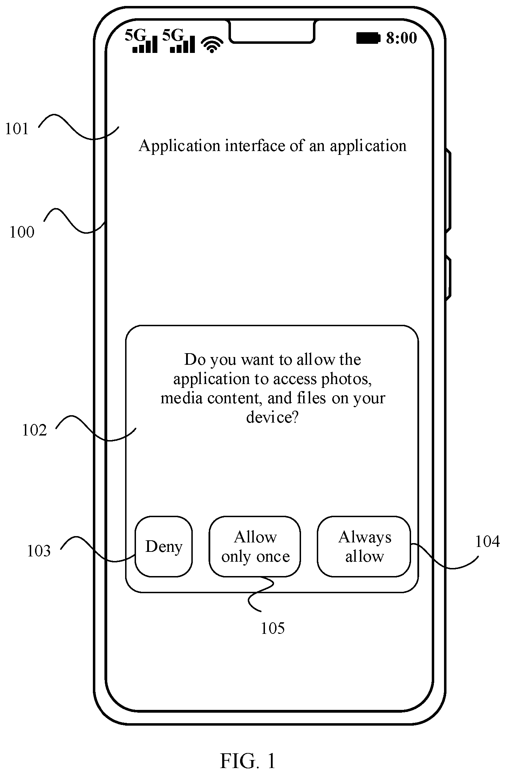

For example, FIG. 1 is a diagram of an application interface in a case in which an electronic device 100 runs an application. When the application is run, the electronic device displays an application interface 101 shown in FIG. 1. A window 102 is displayed on the application interface 101 shown in FIG. 1. It should be understood that the window 102 may be a window provided by an operating system. Prompt information "Do you want to allow the application to access photos, media content, and files on your device?" is displayed in the window 102. A control 103 used for denying, a control 105 used for allowing only once, and a control 104 used for always allowing are further displayed in the window 102. When the user taps the control 105, the application can access the photos, the media content, and the files on the electronic device during current running. Then, when the electronic device runs the application again, the application further displays the interface shown in FIG. 1 for user authorization. However, after the user taps the control 105 a plurality of times (for example, twice), the application is authorized by the user by default each time the application is run. As a result, each time the application is run, regardless of whether the application needs to access the photos, the media content, and the files on the electronic device, the application excessively uses permission to access the foregoing information. Consequently, user privacy is leaked, and a security risk exists.

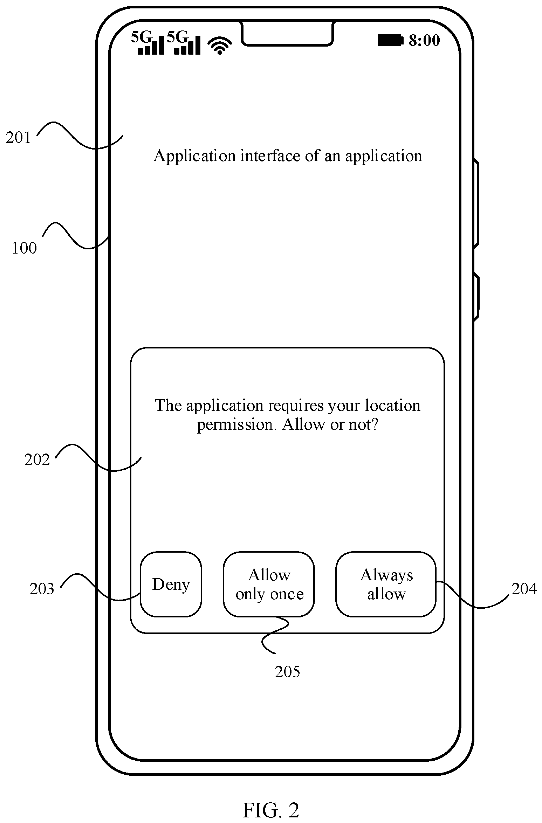

For another example, FIG. 2 is a diagram of an application interface in a case in which an electronic device 100 runs an application. When the application is run, the electronic device displays an application interface 201 shown in FIG. 2. A window 202 is displayed on the application interface 201 shown in FIG. 2. It should be understood that the window 202 may be a window provided by an operating system. Prompt information "The application requires your location permission. Allow or not?" is displayed in the window 202. A control 203 used for denying, a control 205 used for allowing only once, and a control 204 used for always allowing are further displayed in the window 202. When the user taps the control 205, the application can obtain location information of the electronic device during current running. Then, when the electronic device runs the application again, the application further displays the interface shown in FIG. 2 for user authorization. However, after the user taps the control 205 a plurality of times (for example, twice), the application is authorized by the user by default each time the application is run. As a result, each time the application is run, regardless of whether the application needs to obtain the location information of the electronic device, the application excessively uses permission to access the foregoing information. Consequently, user privacy is leaked, and a security risk exists.

To resolve the foregoing technical problems, an embodiment of this application provides a system control-based application permission control method, applied to an electronic device. Based on the method provided in the following embodiments of this application, a system control may be displayed on an interface of an application. A user operates the system control, so that an operating system of the electronic device grants permission to the system control, to obtain information in place of the application. The application does not directly obtain the permission from the operating system of the electronic device to obtain the information. It can be learned that, when the application is run, the electronic device does not need to prompt, in a form of pop-up window, the user to grant the permission to the application. In view of this, the application does not directly obtain permission that carries related information of the user. On this basis, the application does not excessively use the permission to obtain the related information. This ensures information security and controllability.

In addition, the electronic device does not need to prompt, in a form of pop-up window on the interface of the application, the user to grant the permission to the application. This effectively avoids interference, to the user, caused by displaying a window a plurality of times. In addition, an operation event of the user on the system control is directly transmitted to the operating system of the electronic device, and the operating system of the electronic device processes the operation event (for example, performs filtering, security verification, and the like on the operation event), so that the operation event is not processed by the application. This avoids a case in which the application forges the operation event, and improves control security.

The application may be understood as a third-party application, or the application may be understood as some system applications that can be uninstalled by the user. This is not specifically limited in embodiments of this application.

The system control may be a control having a function attribute. For example, the system control may be a control used to obtain a geographical location, the system control may be a control used to obtain contact information, or the system control may be a control used to obtain an image. Certainly, the system control may be another functional control. For example, the system control may be a control used to obtain an email address. These are not enumerated one by one in embodiments of this application.

The system control may replace/cover a first application control with a same function on a display interface of the application. The application is run in a first process, and the system control is run in a second process. In other words, the process in which the system control is run is different from the process in which the application is run.

For example, the first application control may include a control A used to obtain the geographical location, a control B used to obtain the contact information, and a control C used to obtain the image that are displayed on the display interface of the application. Correspondingly, the system control in embodiments of this application may be a system control that implements a function of the control A, the control B, or the control C.

The following uses an example in which the system control is a control used to obtain the geographical location for description.

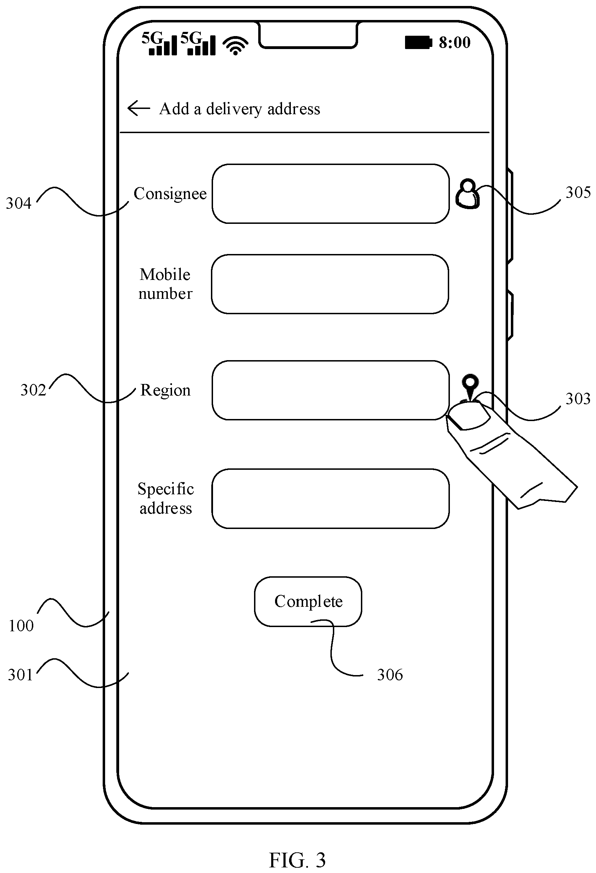

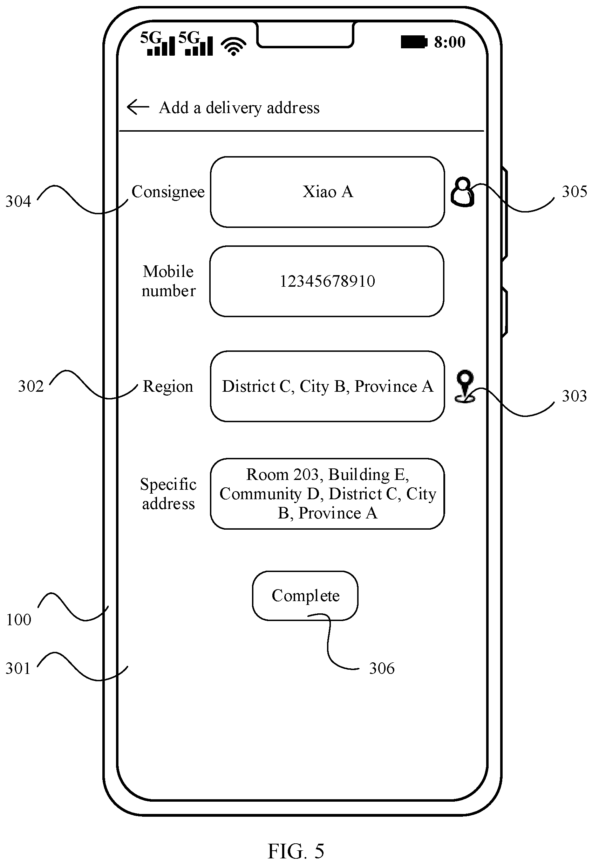

For example, in a running process of the application, an application interface 301 displayed by the electronic device 100 shown in FIG. 3 includes a system control (a control used for address positioning) 303. When the user taps the system control 303, in response to the tap operation of the user, the electronic device 100 performs security verification on a tap event corresponding to the tap operation. After the security verification succeeds, the electronic device obtains location information of the electronic device. For example, the location information is "Community D, District C, City B, Province A". The electronic device sends the location information to the application, and the application displays the location information on the application interface. For example, as shown in FIG. 5, the location information "District C, City B, Province A" is displayed in an address input box 302 displayed on the application interface 301 of the application.

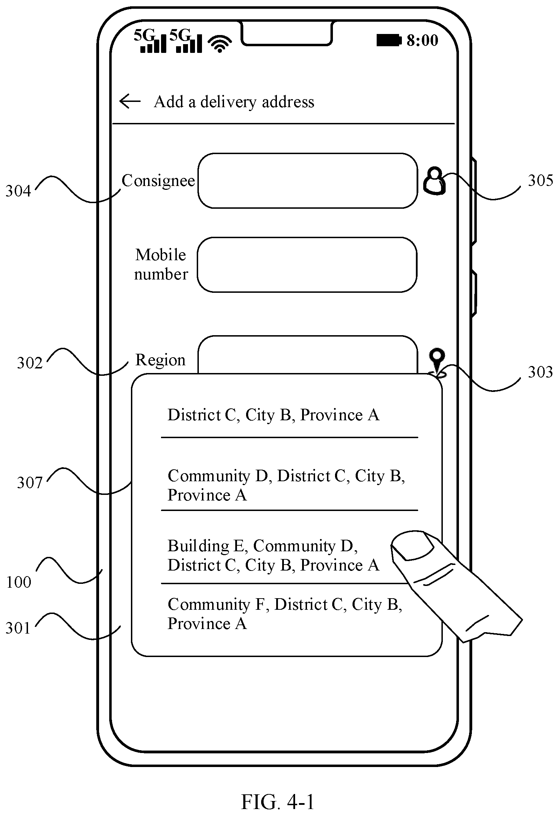

For example, a difference from the foregoing example lies in that, when the user taps the control 303 shown in FIG. 3, the electronic device may display an interface 301 shown in FIG. 4-1, display a window 307 on the interface, and display a plurality of addresses in the window 307, and the user can select a desired address from the plurality of addresses, for example, "Building E, Community D, District C, City B, Province A". Then, the electronic device sends location information of the address to the application, and performs an operation the same as that in the foregoing example. Details are not described herein again.

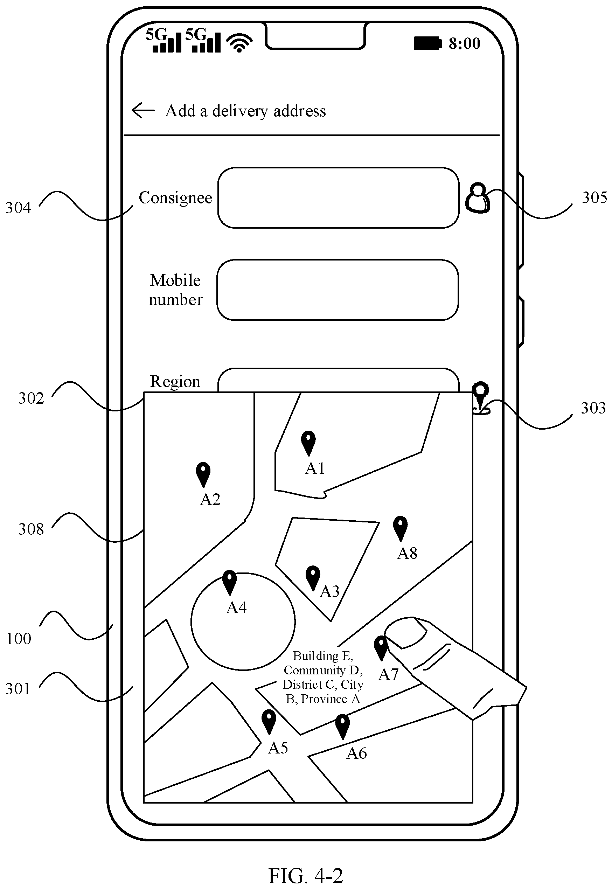

For example, a difference from the foregoing example lies in that, when the user taps the control 303 shown in FIG. 3, the electronic device may alternatively display an interface 301 shown in FIG. 4-2, display a window 308 on the interface, and display a map in the window 308, and the user may select any location, for example, A7 shown in FIG. 4-2, on the map by operating the map, where location information corresponding to A7 is "Building E, Community D, District C, City B, Province A". Then, the electronic device sends location information of the address to the application, and performs an operation the same as that in the foregoing example. Details are not described herein again.

Certainly, after the user taps the control 303, various windows for selecting/entering the location information may be displayed. For example, an input box used to search for information may be displayed in the window. When the user enters a required address in the input box, addresses associated with the address may be further displayed in the window. Further, the user can select the desired address from these addresses. Therefore, this embodiment of this application may be applied to a plurality of scenarios. This is not specifically limited herein. During specific implementation, a design may be performed based on an actual requirement.

It can be learned that, when the application is run, the electronic device does not need to prompt, in a form of pop-up window, the user to grant the permission to the application. In view of this, the application does not directly obtain the permission that carries the related information of the user. On this basis, the application does not excessively use the permission to obtain the related information. This ensures information security and controllability.

When the application needs to obtain the location information, the user may tap the system control, and the operating system of the electronic device grants permission for obtaining the location information to the system control, so that the system control obtains the location information based on the permission. When the application does not need to obtain the location information, the user does not perform an operation on the system control, and the system control of the electronic device does not obtain the permission for obtaining the location information, and does not obtain the location information.

Certainly, in this embodiment of this application, not only the system control is displayed on the interface, but also a second application control may be displayed on the interface. The second application control may be a control having a function attribute. For example, the second application control is used to trigger obtaining of user authorization information. When the user taps the second application control, the electronic device displays an authorization interface, where authorization information and a confirmation control are displayed on the authorization interface. When the user taps the confirmation control, the electronic device grants permission corresponding to the authorization information to the application. For example, the interface displayed by the application is a login interface, and a login control is displayed on the interface. When the user taps the login control, the electronic device displays an authorization interface, where "Do you want to log in to with the application account A" and a Login allowed control are displayed on the authorization interface. When the user taps the Login allowed control, the electronic device allows the application to log in with the application account A.

The electronic device may be a device like a mobile phone, a tablet computer, a laptop computer, a notebook computer, an ultra-mobile personal computer (Ultra-mobile Personal Computer, UMPC), a handheld computer, a netbook, a personal digital assistant (Personal Digital Assistant, PDA), or a wearable electronic device. A specific form of the electronic device is not specially limited in embodiments of this application.

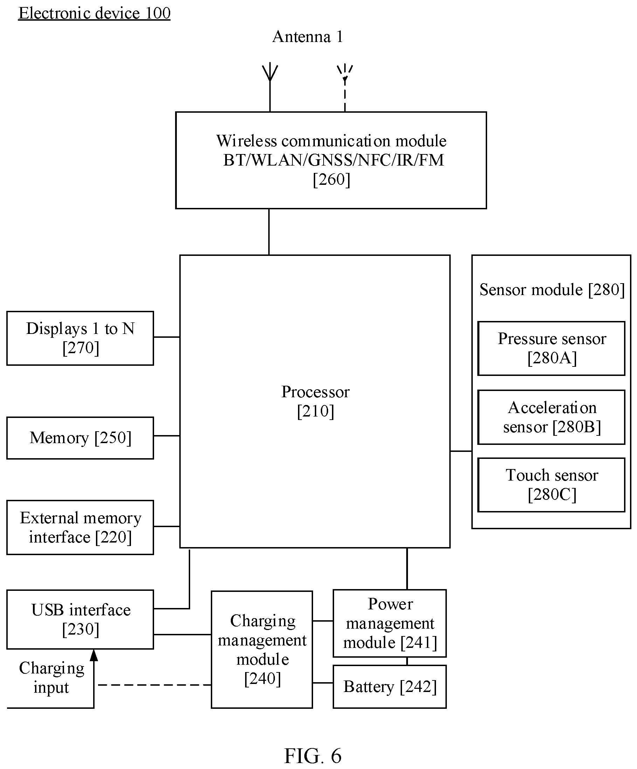

FIG. 6 is a block diagram of a structure of the foregoing electronic device.

As shown in FIG. 6, the electronic device 100 may include a processor 210, an external memory interface 220, a universal serial bus (universal serial bus, USB) interface 230, a charging management module 240, a power management module 241, a battery 242, a memory 250, an antenna 1, a wireless communication module 260, a display 270, a sensor module 280, and the like. The sensor module 280 may include a pressure sensor 280A, an acceleration sensor 280B, a touch sensor 280C, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU), and the like. Different processing units may be independent components, or may be integrated into one or more processors.

The controller may generate an operation control signal based on instruction operation code and a time sequence signal, to complete control of instruction fetching and instruction execution.

The memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory. This avoids repeated access and reduces a waiting time of the processor 210, and therefore improves system efficiency.

The charging management module 240 is configured to receive charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device. When charging the battery 242, the charging management module 240 may further supply power to the electronic device by using the power management module 241.

The power management module 241 is configured to connect the battery 242, the charging management module 240, and the processor 210. The power management module 241 receives an input from the battery 242 and/or the charging management module 240, and supplies power to the processor 210, the internal memory 221, the display 270, the camera 293, the wireless communication module 260, and the like. The power management module 241 may be further configured to monitor parameters such as a battery capacity, a quantity of battery cycles, and a battery health status (electric leakage and impedance). In some other embodiments, the power management module 241 may alternatively be disposed in the processor 210. In some other embodiments, the power management module 241 and the charging management module 240 may alternatively be disposed in a same component.

A wireless communication function of the electronic device may be implemented through the antenna 1, the wireless communication module 260, the modem processor, the baseband processor, and the like.

The antenna 1 is configured to: transmit and receive electromagnetic wave signals. Each antenna of the electronic device may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The wireless communication module 260 may provide a solution to wireless communication applicable to the electronic device, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 260 may be one or more devices integrating at least one communication processing module. The wireless communication module 260 receives the electromagnetic wave through the antenna 1, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 1. In some embodiments, the wireless communication module 260 receives an application message sent by the server.

The electronic device implements a display function by using the GPU, the display 270, the application processor, and the like. The GPU is a microprocessor for image processing, and connects the display 270 and the application processor. The GPU is configured to: perform mathematical and geometric computation, and render an image. The processor 210 may include one or more GPUs that execute program instructions to generate or change displayed information.

The display 270 is configured to display an image, a video, and the like. The display 270 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device may include one or N displays 270, where N is a positive integer greater than 1.

In some embodiments, the display 207 displays the interface 301 shown in FIG. 3, and displays, on the interface 301, the control 303 that is used for positioning and that has a positioning function and the control 305 used to obtain user information. The input box 302 for entering a region is further displayed on the interface 301.

In some examples, the display 207 displays the interface 301 shown in FIG. 3, and the control 303 used for the positioning function is displayed on the interface 301. When the user taps the control 303, the electronic device 100 receives the tap operation of the user. In response to the operation, the display 207 of the electronic device 100 displays the interface 301 shown in FIG. 4-1. The window 307 is displayed on the interface 301, and the plurality of addresses are displayed in the window 307. For example, as shown in FIG. 4-1, the plurality of addresses may include: District C, City B, Province A, Community D, District C, City B, Province A, Building E, Community D, District C, City B, Province A, and Community F, District C, City B, Province A. When the user selects the address "Building E, Community D, District C, City B, Province A" from the plurality of addresses, the display 207 of the electronic device 100 displays the interface 301 shown in FIG. 5, and "District C, City B, Province A" is entered in the input box 302 displayed on the interface 301.

In some examples, the display 207 displays the interface 301 shown in FIG. 3, and the control 303 used for the positioning function is displayed on the interface 301. When the user taps the control 303, the electronic device 100 receives the tap operation of the user. In response to the operation, the display 207 of the electronic device 100 displays the interface 301 shown in FIG. 4-2. The window 308 is displayed on the interface 301, and the map is displayed in the window 308. The user may operate the map, for example, scale up, scale down, or slide the map. When the user selects a location (for example, the point A7 in FIG. 4-2) on the map, the electronic device may obtain the address of the point A7, for example, the address "Building E, Community D, District C, City B, Province A". The electronic device displays the address in the input box 302 on the interface 301 shown in FIG. 5. "District C, City B, Province A" may be displayed in the input box 302.

The external memory interface 220 may be configured to connect to an external storage card, for example, a micro SD card, to expand a storage capability of the electronic device. The external memory card communicates with the processor 210 through the external memory interface 220, to implement a data storage function. For example, files such as music and a video are stored in the external storage card. In some embodiments, an external storage device is connected through the memory interface 220, to copy an installation package of a to-be-installed application from the external storage device.

The memory 250 may be configured to store computer-executable program code. The executable program code includes instructions. The memory 250 may include a program storage area and a data storage area. The program storage area may store an operating system, an application required by at least one function (for example, a sound playing function or an image playing function), and the like. The data storage area may store data (such as audio data and a phone book) created when the electronic device is used, and the like. In addition, the memory 250 may include a high-speed random access memory, or may include a nonvolatile memory, for example, at least one magnetic disk storage device, a flash memory, or a universal flash storage (universal flash storage, UFS). The processor 210 runs instructions stored in the memory 250 and/or instructions stored in the memory disposed in the processor, to perform various function applications and data processing of the electronic device.

The pressure sensor 280A is configured to sense a pressure signal, and can convert the pressure signal into an electrical signal. In some embodiments, the pressure sensor 280A may be disposed on the display 270. There are many types of pressure sensors 280A, for example, a resistive pressure sensor, an inductive pressure sensor, and a capacitive pressure sensor. The capacitive pressure sensor may include at least two parallel plates made of conductive materials. When a force is applied to the pressure sensor 280A, a capacitance between electrodes changes. The electronic device determines a pressure strength based on the change of the capacitance. When a touch operation is performed on the display 270, the electronic device detects intensity of the touch operation through the pressure sensor 280A. The electronic device may also calculate a touch location based on a detection signal of the pressure sensor 280A. In some embodiments, touch operations that are performed at a same touch location but have different touch operation intensity may correspond to different operation instructions. For example, when a touch operation whose touch operation intensity is less than a first pressure threshold is performed on an application icon of Messaging, an instruction for viewing an SMS message is performed. When a touch operation whose touch operation intensity is greater than or equal to the first pressure threshold is performed on the application icon of Messaging, an instruction for creating a new SMS message is performed.

The acceleration sensor 280B may detect accelerations in various directions (usually on three axes) of the electronic device, and may detect magnitude and a direction of gravity when the electronic device is stationary. The acceleration sensor 280B may be further configured to identify a posture of the electronic device, and is used in an application such as switching between a landscape mode and a portrait mode or a pedometer.

The touch sensor 280C is also referred to as a "touch component". The touch sensor 280C may be disposed on the display 270. The touch sensor 280C and the display 270 form a touchscreen, which is also referred to as a "touch screen". The touch sensor 280C is configured to detect a touch operation performed on or near the touch sensor 280C. The touch sensor may transfer the detected touch operation to the application processor, to determine a type of a touch event. A visual output related to the touch operation may be provided on the display 270. In some other embodiments, the touch sensor 280C may alternatively be disposed on a surface of the electronic device at a location different from that of the display 270.

In some embodiments, the touch sensor 280C detects a touch operation performed by the user on the control 303 that is displayed on the interface 301 shown in FIG. 3 and that is used for the positioning function. In some embodiments, the touch sensor 280C detects a touch operation performed by the user on the control 305 that is displayed on the interface 301 shown in FIG. 3 and that is used to obtain the user information.

Certainly, the electronic device may further include another functional unit. This is not limited in embodiments of this application.

In addition, actions, terms, and the like in embodiments of this application may be mutually referenced. This is not limited. In embodiments of this application, a name of a message exchanged between devices, a name of a parameter in a message, or the like is merely an example. Another name may alternatively be used during specific implementation. This is not limited.

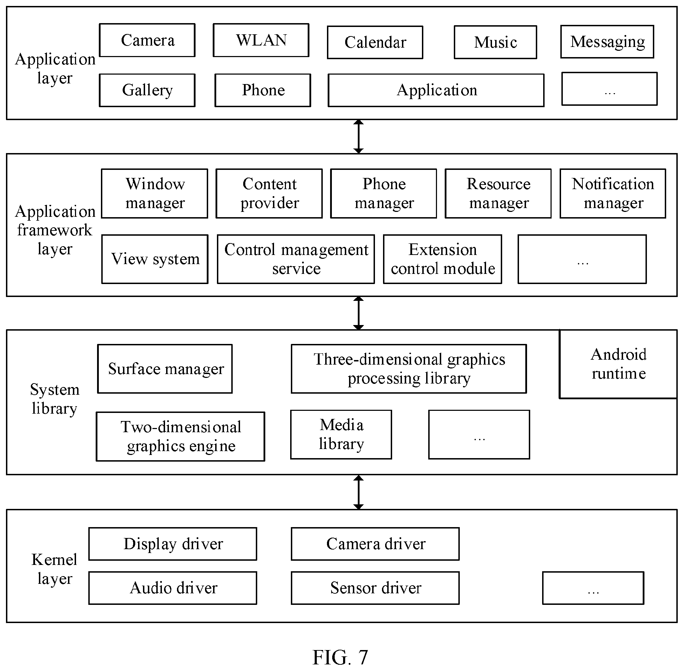

FIG. 7 is a diagram of a software architecture of the electronic device according to an embodiment of this application. As shown in FIG. 7, a software system of the electronic device 100 may use a layered architecture, an event-driven architecture, a microkernel architecture, a micro service architecture, or a cloud architecture. In embodiments of this application, an Android system with a layered architecture is used as an example.

In a layered architecture, software is divided into several layers, and each layer has a clear role and task. The layers communicate with each other through a software interface. In some embodiments, a system is divided into four layers: an application layer, an application framework layer, a runtime and system library, and a kernel layer from top to bottom.

The application layer may include a series of application packages.

As shown in FIG. 7, the application packages may include applications (or referred to as apps) such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 7, the application framework layer may include a window manager, a content provider, a view system, a telephony manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are dialed and answered, a browsing history, a bookmark, a phone book, and the like.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively display a notification in a form of chart or scroll bar text in a status bar at the top of the system, for example, a notification of an application run in the background, or may display a notification in a form of dialog interface on the screen. For example, text information is displayed in the status bar, an announcement is given, the electronic device vibrates, or the indicator light blinks.

The view system includes visual controls such as a control for displaying a text and a control for displaying a picture. The view system may be used to construct an application. A display interface may include one or more views. For example, a display interface including a notification icon of Messaging may include a text display view and an image display view.

In this embodiment of this application, the application framework layer may further include a control management service and an extension control module. The control management service is used to receive a request sent by an application, and create a system control based on the request. The extension control module is used to: after a first operation is performed on a system control, perform security verification on an operation event corresponding to the first operation, obtain information after the verification succeeds, and send the information to the application.

It should be understood that, for the method or the device provided in embodiments of this application, a corresponding extension control module may alternatively be a part of the control management service. The control management service may be run in a process, to distinguish from a process in which an application is run.

The runtime includes a core library and a virtual machine. The runtime is responsible for scheduling and management of the Android system.

The core library includes two parts: One part is a performance function that a java language needs to invoke, and the other part is a core library of Android.

The application layer and the application framework layer run on the virtual machine. The virtual machine executes java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is used to manage a display subsystem, and provide fusion of 2-dimensional (2-Dimensional, 2D) and 3-dimensional (3-Dimensional, 3D) layers to a plurality of applications.

The media library supports playing and recording of a plurality of common audio and video formats, a static image file, and the like. The media library may support a plurality of audio and video encoding formats such as MPEG-4, H.264, MP3, AAC, AMR, JPG, and PNG.

The 3-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

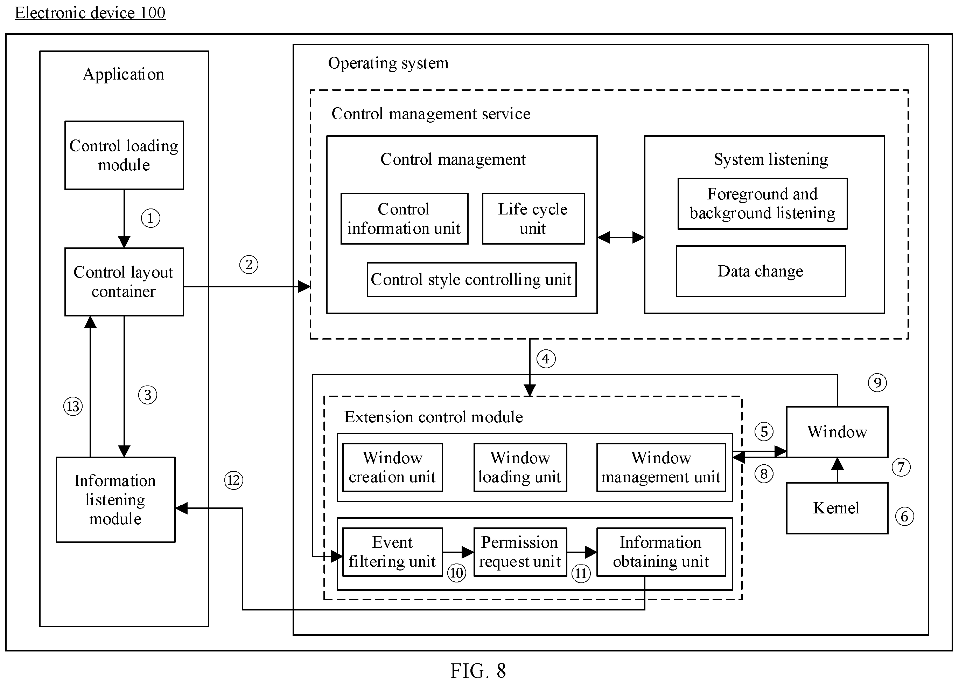

FIG. 8 is a diagram of another software architecture of the electronic device according to an embodiment of this application. As shown in FIG. 8, the control management service shown in FIG. 7 may include a control information unit, a life cycle unit, and a control style controlling unit.

The control information unit may be used to: when a plurality of system controls (namely, system controls) are created on one or more pages, store and manage attribute information of a plurality of first application controls corresponding to the system controls. The attribute information of the first application control includes at least one of the following: size information of the control, a style of the control, a type of the control, a life cycle of the control, and location information of the control. The control information unit may determine the system control based on the attribute information of the first application control.

The life cycle unit may be used to manage a life cycle of each system control. The life cycle unit may determine the life cycle of the system control based on the life cycle of the first application control.

The control style controlling unit may be used to: determine the style of the system control based on the attribute information of the first application control, and verify security of control style configuration.

As shown in FIG. 8, the extension control module shown in FIG. 7 may include a window creation unit, a window loading unit, a window management unit, an event filtering unit, and an information obtaining unit.

The window creation unit may be used to create/eliminate a window. The window may include a first window.

The window loading unit may be used to load the first window, to display the system control in the first window.

The window management unit may be used to distribute an operation event of the system control to the event filtering unit.

The event filtering unit may be used to filter the operation event, to determine a security event.

A permission request unit may be used to obtain first permission after the event filtering unit determines that the operation event is a security event, where the first permission is permission to access/obtain first information.

The information obtaining unit may be used to access/obtain the first information based on the first permission.

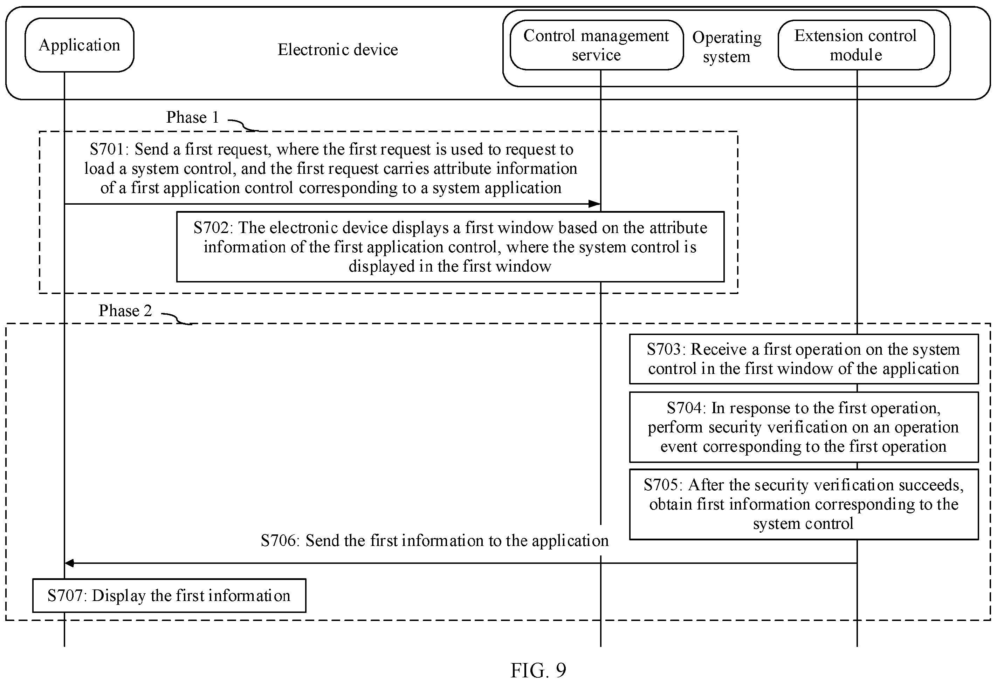

FIG. 9 is a flowchart of a system control-based application permission control method according to an embodiment of this application. As shown in FIG. 9, the method is applied to an electronic device, and an application is installed on the electronic device. The method may include S701 to S707. Refer to FIG. 8 and FIG. 9. Specifically, the method may be described in the following phases.

In Phase 1, the system control is displayed.

S701: The application sends a first request, where the first request is used to request to load the system control, and the first request carries attribute information of the first application control corresponding to the system control.

In some examples, the first application control is a control that is in the application and that is used to trigger obtaining of the first information. In other words, the first application control corresponds to the system control. The first information may be understood as privacy information of a user.

In some examples, the privacy information may be understood as personal privacy information of the user, for example, information about the user (for example, a mobile number of the user, account information of the user, or friend information of the user), location information, a file, a photo, or media content.

In some examples, the application may be a third-party application or a system application. The application may be a shopping application, a learning application, an entertainment application, an information query application, or the like. Certainly, the application may alternatively be another type of application, for example, a communication application. This is not specifically limited in embodiments of this application.

An example of an occasion at which the application sends the first request is as follows.

Case 1: The application sends the first request in a process of starting the application. For example, when the user taps an icon of the application, the electronic device starts the application in response to the tap operation of the user. In this case, the application sends the first request.

Case 2: When the application is running, the application sends the first request. That the application is running may be understood as a running state of the application after the application is started. For example, after the application is started, the application is run in the foreground or the application is run in the background. In this case, the application sends the first request.

Case 3: After the application is started, when a specified application interface needs to be displayed, the application sends the first request. The specified application interface may be understood as an interface on which a control used to trigger obtaining of the privacy information of the user exists. For example, the user taps a control used to add a delivery address, and the electronic device displays, in response to the tap operation of the user, an interface for "adding a delivery address" (for example, a control used for positioning is displayed on the interface). When the interface is loaded and displayed, the application sends the first request. This is not specifically limited herein in this application.

In some examples, the attribute information of the first application control may include at least one of the following: the size information of the control, the style of the control, the type of the control, the life cycle of the control, and the location information of the control. The life cycle of the system control is determined based on the life cycle of the first application control, and the life cycle of the first application control is determined based on a life cycle of the application. In other words, the system control is valid when the application is running.

For example, as shown in FIG. 8, S701 may be specifically as follows: ① When the application is started or the application starts the specified application interface, the control loading module of the application loads a control layout container. The control layout container records the attribute information of the first application control on an application interface. ② The control layout container sends, to the control management service of the electronic device, the first request used to load the system control.

For example, when the application is started, the control layout container determines that a target control exists in controls of the application, or when the application starts the specified application interface, the control layout container determines that a target control (for example, the first application control) exists on the specified application interface, where the target control is a control used to trigger obtaining of the first information. The control layout container sends, to the control management service of the electronic device, a request used to load the system control, where the request carries attribute information of the target control. That is, the control layout container sends the attribute information of the target control to the control management service, so that the control management service creates the system control based on the attribute information of the target control, and displays the system control on the application interface of the application by covering/replacing the target control with the system control.

For example, the application is a shopping application. When the user taps a control that is displayed on an interface of the application and that is used to add a delivery address, a control loading module of the application loads the control layout container, and the control layout container determines a target control on an interface for adding a delivery address. The target controls include a control 1 used to trigger obtaining of location information and a control 2 used to trigger obtaining of user information. The control layout container sends, to the control management service of the electronic device, a first request used to load the system control, where the first request carries attribute information of the control 1 and attribute information of the control 2.

In addition, to facilitate timely receiving of response information of the first request, ③ the control layout container also sends an application listening information request to an information listening module, and the information listening module listens to information received by the application.

S702: The electronic device displays the first window based on the attribute information of the first application control, where the system control is displayed in the first window.

In some examples, the control management service of the electronic device creates the system control based on the attribute information of the first application control. Specifically, as shown in FIG. 8, the control information unit of the control management service may determine a size of the system control based on the size information of the first application control. The life cycle unit of the control management service may determine the life cycle of the system control based on the life cycle of the first application control. The control style controlling unit of the control management service determines the style of the system control based on style information of the first application control.

In some examples, the extension control module of the electronic device creates the first window based on the attribute information of the first application control. Specifically, as shown in FIG. 8, S702 may be specifically as follows: ④ The control management service sends a second request to the extension control module of the electronic device, where the second request is used to request to create the first window, and the second request carries the location information and the size information of the first application control. The window creation unit in the extension control module creates the first window based on the location information and the size information of the first application control.

The foregoing example is still used. The control management service of the electronic device creates, based on the attribute information of the control 1, a system control whose size and style are consistent with those of the control 1, and creates a first window whose size and location are consistent with those of the control 1. Similarly, the control management service of the electronic device creates, based on the attribute information of the control 2, a system control whose size and style are consistent with those of the control 2, and creates a first window whose size and location are consistent with those of the control 2.

In some examples, that the electronic device displays the system control in the first window may be specifically implemented as follows: As shown in FIG. 8, ⑤ the window loading unit of the extension control module 5 loads the system control to the first window, that is, displays the system control in the first window.

The foregoing example is still used. The system control obtained in S702 is loaded to the first window, to obtain display effect shown in FIG. 3. As shown in FIG. 3, the control 303 is displayed at a location of the control 1 through covering, that is, the control 1 is blocked by the control 303 in FIG. 3. Information such as a size, a style, and a location of the control 303 is determined based on the attribute information of the control 1. As shown in FIG. 3, the control 305 is displayed at a location of the control 2 through covering. For example, the control 2 is blocked by the control 305 in FIG. 3. Information such as a size, a style, and a location of the control 305 is determined based on the attribute information of the control 2.

After Phase 1, the system control is displayed on the application interface of the application. When the electronic device needs to obtain the first information, the user needs to operate the system control. After the user operates the system control, the electronic device may perform an operation in Phase 2. Details are as follows.

In Phase 2, permission of the application is controlled based on the system control.

S703: The electronic device receives a first operation on the system control in the first window of the application.

The first operation may be understood as a trigger operation on the system control. For example, the first operation may include a tap operation, a press operation, a touch operation, and the like. This is not specifically limited in embodiments of this application.

Specifically, as shown in FIG. 8, S703 may be specifically as follows: ⑥ When the user performs the first operation on the system control in the first window of the application, a kernel of the electronic device receives the first operation of the user.

The foregoing example is still used. When the user adds the delivery address, the user may tap the control 303 shown in FIG. 3. Similarly, when the user adds recipient information, the user may tap the control 305 shown in FIG. 3.

That the electronic device obtains the first information corresponding to the system control in response to the first operation may be specifically implemented as follows: For example, the operating system of the electronic device may grant corresponding permission to the system control by default. For example, location obtaining permission is granted to a location system control by default, and gallery access permission is granted to an image system control by default. The electronic device may verify the permission of the system control based on the default permission. The electronic device obtains the first information when the permission of the system control passes. For specific implementation, refer to the descriptions in S704 and S705. Details are as follows.

S704: In response to the first operation, the electronic device performs security verification on an operation event corresponding to the first operation.

The operation event is an event used to trigger the application to implement a specified function. The specified function may include a positioning function, an information obtaining function, an information query function, and the like.

Specifically, as shown in FIG. 8, S704 may be specifically as follows: ⑦ After the kernel of the electronic device receives the first operation of the user, the kernel of the electronic device encapsulates the first operation to obtain the operation event. ⑧ The window management unit of the extension control module distributes the operation event. Specifically, the operation event is obtained by the user by performing an operation on the system control (namely, the system control). Therefore, the window management unit distributes the operation event to the event filtering unit of the electronic device. ⑨ The event filtering unit performs filtering on the operation event. Specifically, the event filtering unit performs security verification on the operation event corresponding to the first operation, to determine that the operation event is a security event.

For example, the event filtering unit may store a response event. When the operation event matches the response event, the event filtering unit determines that the operation event is a security event; or when the operation event does not match the response event, the event filtering unit determines that the operation event is a non-security event.

As shown in FIG. 8, S704 may be specifically: ⑩ After the event filtering unit determines that the operation event is a security event, the permission request unit in the extension control module obtains first permission. The first permission may be access permission/obtaining permission for the first information, or the like. That the permission request unit obtains the first permission may be specifically implemented as follows: The permission request unit requests to obtain the first permission from the permission management module based on attribute information of the operation event. The attribute information of the operation event is used to represent a property of the operation event. For example, the attribute information of the operation event may include positioning attribute information, and the operation event may be understood as a positioning event.

The foregoing example is still used. When the user taps the control 303 shown in FIG. 3, the extension control module in the operating system of the electronic device performs security verification on the tap event. After the security verification succeeds, the extension control module in the operating system of the electronic device obtains permission for obtaining the location information. After the permission is obtained, the extension control module in the operating system of the electronic device performs S705. Similarly, when the user taps the control 305 shown in FIG. 3, the extension control module in the operating system of the electronic device performs security verification on the tap event. After the security verification succeeds, the extension control module in the operating system of the electronic device obtains permission for obtaining the user information. After the permission is obtained, the extension control module in the operating system of the electronic device performs S705.

S705: The electronic device obtains the first information.

Specifically, as shown in FIG. 8, ⑪ after the verification succeeds, the information obtaining unit of the extension control module obtains the first information based on the first permission.

For example, after the permission for obtaining the location information is obtained, the extension control module in the operating system of the electronic device obtains positioning information of the electronic device in real time. For example, in a map navigation scenario, a tap event is a navigation event, and the extension control module in the operating system of the electronic device obtains the location information in real time. Alternatively, after obtaining the permission for obtaining the location information, the extension control module in the operating system of the electronic device obtains default location information. For example, in a network taxi hailing scenario, a tap event is a destination selection event, and the extension control module in the operating system of the electronic device obtains home location information or company location information. Alternatively, after the permission for obtaining the location information is obtained, the extension control module in the operating system of the electronic device obtains historical location information based on an application scenario. For example, in a network taxi hailing scenario, a tap event is a destination selection event, and the extension control module in the operating system of the electronic device obtains location information of a shopping mall that the user frequently visits.

For example, after the permission for obtaining the user information is obtained, the extension control module in the operating system of the electronic device obtains default user information. For example, in a delivery address editing scenario, a tap event is a consignee editing event, and the extension control module in the operating system of the electronic device obtains the default user information. Alternatively, after the permission for obtaining the user information is obtained, the extension control module in the operating system of the electronic device obtains historical user information. For example, in a user account login scenario, a tap event is a user account input event, and the extension control module in the operating system of the electronic device obtains the historical login information.

S706: The electronic device sends the first information to the application. Correspondingly, the application receives the first information.

Specifically, as shown in FIG. 8, ⑫ the information obtaining unit may send the first information to the information listening module of the application through a sending unit (for example, a callback interface).

For example, the operating system of the electronic device invokes the callback interface to send the first information to the application. For example, the operating system of the electronic device invokes the callback interface to send the location information and the user information to the application.

S707: The application displays the first information.

Specifically, as shown in FIG. 8, ⑬ after the information listening module obtains the first information through listening, the information listening module sends the first information to the control layout container for display.

The foregoing example is still used. After the application receives the first information, the electronic device displays the display interface 301 shown in FIG. 5. On the interface, default consignee information, for example, "Xiao A" is displayed in an input box of Consignee. In addition, associated information (for example, a mobile number "12345678910") of the consignee Xiao A is displayed in an input box of Mobile number. On this interface, default location information, for example, District C, City B, Province A, is displayed an input box of Region.

The following describes in detail, for a specific application scenario, the system control-based application permission control method provided in this embodiment of this application.

### Scenario 1: location information obtaining

For example, the application is a shopping application. When the application is run, the user needs to add a delivery address. The electronic device performs the operation in Phase 1. In this case, the electronic device 100 displays the interface 301 shown in FIG. 3. The system control 303 used for positioning is displayed on the interface 301. When the user taps the system control 303, the electronic device 100 performs the operation in Phase 2. In this case, the electronic device may obtain a plurality of addresses, for example, the plurality of addresses displayed in the window 307 shown in FIG. 4-1. When the user selects the address "Building E, Community D, District C, City B, Province A", the electronic device displays the interface 301 shown in FIG. 5, and displays "District C, City B, Province A" in an address input box 302 on the interface 301.

It should be understood that the system control 303 shown in FIG. 3 covers/replaces the first application control that is in the application and that is used for the positioning function. When the user needs to obtain the location information, the user taps the system control, and the operating system of the electronic device performs security verification on a tap event corresponding to the tap operation, obtains the location information, and sends the location information to the application, to present the location information to the user. When the user does not need to obtain the location information, the user does not perform an operation on the system control, and the operating system of the electronic device does not obtain permission for obtaining the location information, and does not obtain the location information.

### Scenario 2: user information obtaining

Similarly, the user needs to add the consignee information. The electronic device performs the operation in Phase 1. In this case, the electronic device 100 displays the interface 301 shown in FIG. 3. The system control 305 used to obtain the user information is displayed on the interface 301. When the user taps the system control 305, the electronic device 100 performs the operation in Phase 2. In this case, the electronic device sends, to the application, the obtained first information, for example, the first information "Xiao A" and "the mobile number of Xiao A is 12345678910", and the application displays the interface 301 shown in FIG. 5. "Xiao A" is displayed in the input box 304 of Consignee on the interface 301, and "12345678910" is displayed in the input box of Mobile number. It can be learned that, compared with the conventional technology, the system control 303 shown in FIG. 3 covers/replaces the first application control that is in the application and that is used for a user information obtaining function. When the user needs to obtain the user information, the user taps the system control, and the operating system of the electronic device performs security verification on a tap event corresponding to the tap operation, obtains the user information, and sends the user information to the application, to present the user information to the user. When the user does not need to obtain the user information, the user does not perform an operation on the system control, and the operating system of the electronic device does not obtain the permission for obtaining the user information, and does not obtain the user information.

Therefore, in Scenario 1 and Scenario 2, only when the application needs to obtain the location information, the operating system of the electronic device grants, to the application, the permission for obtaining the location information.

Based on the foregoing scenarios, the method provided in this embodiment of this application can effectively prevent the application from excessively obtaining information after related permission is granted to the application, to ensure privacy security of the user and reduce an information security risk.

In addition, the electronic device does not need to prompt, in a form of pop-up window on the interface of the application, the user to grant the permission to the application. This effectively avoids interference, to the user, caused by displaying a window a plurality of times. In addition, the operation event of the user on the system control is directly transmitted to the operating system of the electronic device, and the operating system of the electronic device processes the operation event (for example, performs filtering, security verification, and the like on the operation event), so that the operation event is not processed by the application. This avoids a case in which the application forges an operation event, fundamentally avoids forging of the operation event, and improves control security.

Unless otherwise stated or there is a logic conflict, terms and/or descriptions in various embodiments of this application are consistent and may be mutually referenced, and technical features in different embodiments may be combined based on an internal logical relationship thereof, to form a new embodiment.

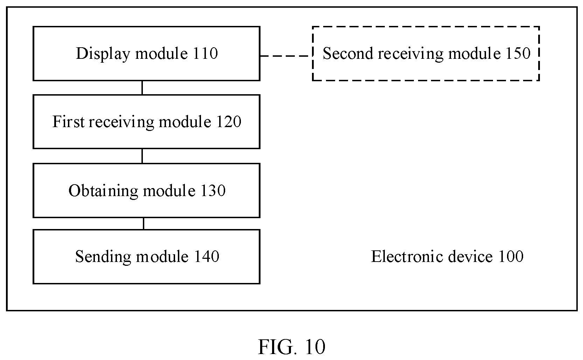

An embodiment of this application further provides an electronic device configured to implement any one of the foregoing methods. For example, an electronic device is provided, including units (or means) configured to implement the steps performed by the electronic device in the foregoing method S701 to S707. For example, FIG. 10 is a diagram of the electronic device according to an embodiment of this application. The electronic device 100 may include a display module 110, a first receiving module 120, an obtaining module 130, and a sending module 140.

The display module 110 is configured to display a first interface of an application, where the first interface includes a system control. The application is run in a first process, the system control is run in a second process, and the second process and the first process are two different processes. For example, the display unit 1330 may perform the step of S702. The display module 110 may be the display 270 shown in FIG. 6.

The first receiving module 120 is configured to receive a first operation on the system control. For example, the first receiving module 120 may perform the step of S703. The first receiving module 120 may be the touch sensor 280C shown in FIG. 6.

The obtaining module 130 is configured to: in response to the first operation, obtain first information corresponding to the system control. For example, the obtaining module 130 may perform the steps of S704 and S705. The obtaining module 130 may be the processor 210 shown in FIG. 6.

The sending module 140 is configured to send the first information to the application. For example, the sending module 140 may perform the step of S706. The sending module 140 may be an interface in the electronic device 100 shown in FIG. 6.

In some embodiments, the electronic device 100 further includes:
a second receiving module 150. The second receiving module 150 is configured to receive a first request sent by the application, where the first request is used to request to load the system control, the first request carries attribute information of a first application control corresponding to the system control, and the first application control is a control that is in the application and that is used to trigger obtaining of the first information. For example, the second receiving module 150 may perform the step of S701. The second receiving module 150 may be the processor 210 shown in FIG. 6.

The display module 110 is configured to display a first window based on the attribute information of the first application control, where the system control is displayed in the first window. For example, the display module 110 may perform the step of S702.

In some embodiments, the obtaining module 130 is configured to: verify permission of the system control; and obtain the first information when the permission of the system control passes.

In some embodiments, the attribute information of the first application control includes at least one of the following: size information of the control, a style of the control, a type of the control, a life cycle of the control, and location information of the control.

In some embodiments, the system control may include a location system control. The first interface may include an address input box. The display module 110 is configured to display a second interface in response to an operation on the location system control, where a plurality of addresses are displayed on the second interface. The sending module 140 is configured to: in response to an operation on a first address in the plurality of addresses, display the first address in the address input box. For example, the display module 110 may perform the step of S707.

In some embodiments, the system control may include a location system control. The first interface may include an address input box. The display module 110 is configured to display a third interface in response to an operation on the location system control, where a map is displayed on the third interface. The sending module 140 is configured to: in response to an operation on a first location on the map, display information about the first location in the address input box. For example, the display module 110 may perform the step of S707.

In a design solution, the first interface further includes a second application control, and the electronic device 100 further includes an authorization module. The display module is configured to display an authorization interface in response to an operation on the second application control, where the authorization interface includes authorization information and a confirmation control. The authorization module is configured to: in response to an operation on the confirmation control, grant permission corresponding to the authorization information to the application.

The device provided in this embodiment of this application can effectively prevent the application from excessively obtaining information after related permission is granted to the application, to ensure privacy security of a user and reduce an information security risk.

In addition, the electronic device does not need to prompt, in a form of pop-up window on an interface of the application, the user to grant the permission to the application. This effectively avoids interference, to the user, caused by displaying a window a plurality of times. In addition, an operation event of the user on the system control is directly transmitted to an operating system of the electronic device, and the operating system of the electronic device processes the operation event (for example, performs filtering, security verification, and the like on the operation event), so that the operation event is not processed by the application. This avoids a case in which the application forges an operation event, fundamentally avoids forging of the operation event, and improves control security.

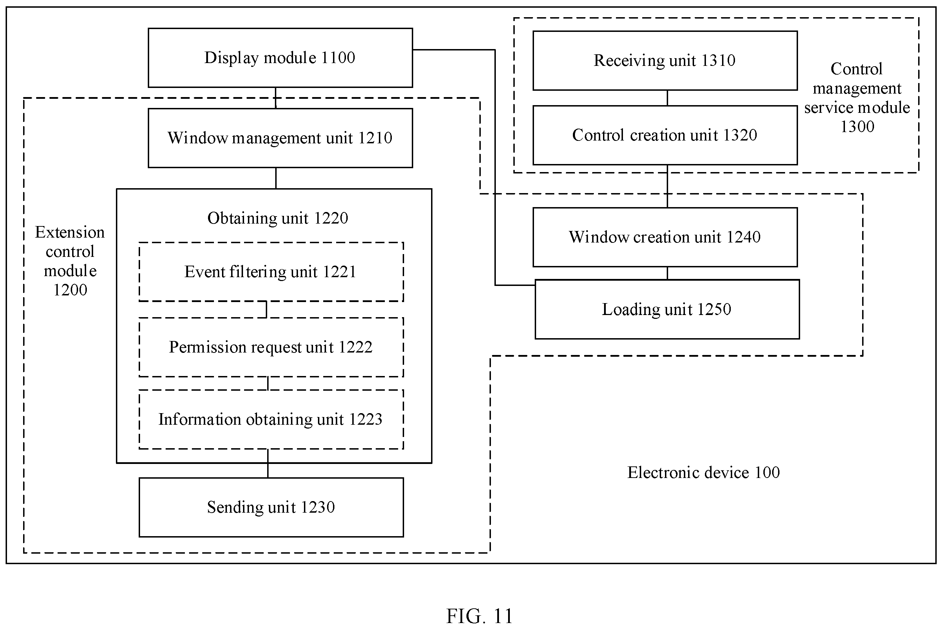

An embodiment of this application further provides an electronic device configured to implement any one of the foregoing methods. For example, an electronic device is provided, including units (or means) configured to implement the steps performed by the electronic device in the foregoing method S701 to S707. For example, FIG. 11 is a diagram of the electronic device according to an embodiment of this application. The electronic device 100 may include a display module 1100 and an extension control module 1200. The extension control module 1200 includes a window management unit 1210, an obtaining unit 1220, and a sending unit 1230.

The display module 1100 is configured to display a first interface of an application, where the first interface includes a system control. The application is run in a first process, the system control is run in a second process, and the second process and the first process are two different processes. For example, the display module 1100 may perform the step of S702. The display module 1100 may be the display 270 shown in FIG. 6.

The window management unit 1210 is configured to receive a first operation on the system control. For example, the window management unit 1210 may perform the step of S703. The window management unit 1210 may be the touch sensor 280C shown in FIG. 6.

The obtaining unit 1220 is configured to: in response to the first operation, obtain first information corresponding to the system control. For example, the obtaining unit 1220 may perform the steps of S704 and S705. The obtaining unit 1220 may be the processor 210 shown in FIG. 6.

The sending unit 1230 is configured to send the first information to the application. For example, the sending unit 1230 may perform the step of S706. The sending unit 1230 may be an interface in the electronic device 100 shown in FIG. 6.

In some embodiments, the electronic device 100 may further include a control management service module 1300. The control management service module 1300 includes a receiving unit 1310 and a control creation unit 1320. The extension control module 1200 further includes a window creation unit 1240 and a loading unit 1250.

The receiving unit 1310 is configured to receive a first request sent by the application, where the first request is used to request to load the system control, the first request carries attribute information of a first application control corresponding to the system control, and the first application control is a control that is in the application and that is used to trigger obtaining of the first information. For example, the receiving unit 1310 may perform the step of S701. The receiving unit 1310 may be the processor 210 shown in FIG. 6.

The control creation unit 1320 is configured to create the system control based on the attribute information of the first application control. For example, the control creation unit 1320 may perform the step of S702. The control creation unit 1320 may be the processor 210 shown in FIG. 6.

The window creation unit 1240 is configured to create a first window based on the attribute information of the first application control. For example, the window creation unit 1240 may perform the step of S702. The window creation unit 1240 may be the processor 210 shown in FIG. 6.

The loading unit 1250 is configured to display the system control in the first window. For example, the loading unit 1250 may perform the step of S702. The loading unit 1250 may be the processor 210 shown in FIG. 6.

In some embodiments, the attribute information of the first application control includes at least one of the following: size information of the control, a style of the control, a type of the control, a life cycle of the control, and location information of the control.

In some embodiments, a life cycle of the system control is determined based on a life cycle of the application.

In some embodiments, the obtaining unit 1220 is configured to: verify permission of the system control; and obtain the first information when the permission of the system control passes.

In some embodiments, the obtaining unit 1220 further includes an event filtering unit 1221 and a permission request unit 1222.

The event filtering unit 1221 is configured to: in response to the first operation, perform security verification on an operation event corresponding to the first operation. For example, the event filtering unit 1221 may perform the step of S704. The event filtering unit 1221 may be the processor 210 shown in FIG. 6.

The permission request unit 1222 is configured to: after it is determined that the operation event is a security event, obtain first permission based on attribute information of the operation event, where the first permission is permission for obtaining the first information. For example, the permission request unit 1222 may perform the step of S705. The permission request unit 1222 may be the processor 210 shown in FIG. 6.

In some embodiments, the obtaining unit 1220 may further include an information obtaining unit 1223. The information obtaining unit 1223 is configured to obtain the first information based on the first permission. For example, the information obtaining unit 1223 may perform the step of S705. The information obtaining unit 1223 may be the processor 210 shown in FIG. 6.

In some embodiments, the system control may include a location system control. The first interface may include an address input box. The display module 1100 is configured to display a second interface in response to an operation on the location system control, where a plurality of addresses are displayed on the second interface. The obtaining unit 1220 is configured to: in response to an operation on a first address in the plurality of addresses, display the first address in the address input box. For example, the display module 1100 may perform the step of S707.

In some embodiments, the system control may include a location system control. The first interface may include an address input box. The display module 1100 is configured to display a third interface in response to an operation on the location system control, where a map is displayed on the third interface. The obtaining unit 1220 is configured to: in response to an operation on a first location on the map, display information about the first location in the address input box. For example, the display module 1100 may perform the step of S707.

In a design solution, the first interface further includes a second application control, and the electronic device further includes an authorization module. The display module is configured to display an authorization interface in response to an operation on the second application control, where the authorization interface includes authorization information and a confirmation control. The authorization module is configured to: in response to an operation on the confirmation control, grant permission corresponding to the authorization information to the application.

In some examples, refer to FIG. 1. The confirmation control may be the control 104 or the control 105 in FIG. 1.

In some examples, refer to FIG. 2. The confirmation control may be the control 204 or the control 205 in FIG. 2.

The device provided in this embodiment of this application can effectively prevent the application from excessively obtaining information after related permission is granted to the application, to ensure privacy security of a user and reduce an information security risk.

In addition, the electronic device does not need to prompt, in a form of pop-up window on an interface of the application, the user to grant the permission to the application. This effectively avoids interference, to the user, caused by displaying a window a plurality of times. In addition, an operation event of the user on the system control is directly transmitted to an operating system of the electronic device, and the operating system of the electronic device processes the operation event (for example, performs filtering, security verification, and the like on the operation event), so that the operation event is not processed by the application. This avoids a case in which the application forges an operation event, fundamentally avoids forging of the operation event, and improves control security.

It should be noted that all related content of the steps in the foregoing method embodiments may be cited in function descriptions of corresponding functional modules. Details are not described herein again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product is run on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing method. The interface circuit is configured to communicate with another module other than the chip.

All or some of any features or any steps in embodiments of this application may be freely combined. A combined technical solution also falls within the scope of this application.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In descriptions of this application, words such as "example" or "for example" are used to give an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner.

The foregoing descriptions about embodiments allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division of the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A system control-based application permission control method, applied to an electronic device, wherein the method comprises:
displaying a first interface of an application, wherein the first interface comprises a system control, the application is run in a first process, and the system control is run in a second process;
receiving a first operation on the system control;
in response to the first operation, obtaining first information corresponding to the system control; and
sending the first information to the application.

2. The method according to claim 1, wherein before the receiving a first operation on the system control, the method further comprises:
receiving a first request sent by the application, wherein the first request is used to request to load the system control, the first request carries attribute information of a first application control corresponding to the system control, and the first application control is a control that is in the application and that is used to trigger obtaining of the first information; and
displaying a first window based on the attribute information of the first application control, wherein the system control is displayed in the first window.

3. The method according to claim 1, wherein the obtaining first information corresponding to the system control comprises:
verifying permission of the system control; and
obtaining the first information when the permission of the system control passes.

4. The method according to claim 2, wherein the attribute information of the first application control comprises at least one of the following: size information of the control, a style of the control, a type of the control, a life cycle of the control, and location information of the control.

5. The method according to any one of claims 1 to 4, wherein the system control comprises a location system control, the first interface comprises an address input box, and the method comprises:
displaying a second interface in response to an operation on the location system control, wherein a plurality of addresses are displayed on the second interface; and
in response to an operation on a first address in the plurality of addresses, displaying the first address in the address input box.

6. The method according to any one of claims 1 to 4, wherein the system control comprises a location system control, the first interface comprises an address input box, and the method comprises:
displaying a third interface in response to an operation on the location system control, wherein a map is displayed on the third interface; and
in response to an operation on a first location on the map, displaying information about the first location in the address input box.

7. The method according to any one of claims 1 to 6, wherein the first interface further comprises a second application control, and the method further comprises:
displaying an authorization interface in response to an operation on the second application control, wherein the authorization interface comprises authorization information and a confirmation control; and
in response to an operation on the confirmation control, granting permission corresponding to the authorization information to the application.

8. An electronic device, wherein the electronic device comprises a display module, a first receiving module, an obtaining module, and a sending module, wherein
the display module is configured to display a first interface of an application, wherein the first interface comprises a system control, the application is run in a first process, and the system control is run in a second process;
the first receiving module is configured to receive a first operation on the system control;
the obtaining module is configured to: in response to the first operation, obtain first information corresponding to the system control; and
the sending module is configured to send the first information to the application.

9. The electronic device according to claim 8, wherein the electronic device further comprises a second receiving module, wherein
the second receiving module is configured to receive a first request sent by the application, wherein the first request is used to request to load the system control, the first request carries attribute information of a first application control corresponding to the system control, and the first application control is a control that is in the application and that is used to trigger obtaining of the first information; and
the display module is configured to display a first window based on the attribute information of the first application control, wherein the system control is displayed in the first window.

10. The electronic device according to claim 8, wherein the obtaining module is configured to:
verify permission of the system control; and
obtain the first information when the permission of the system control passes.

11. The electronic device according to claim 9, wherein the attribute information of the first application control comprises at least one of the following: size information of the control, a style of the control, a type of the control, a life cycle of the control, and location information of the control.

12. The electronic device according to any one of claims 8 to 11, wherein the system control comprises a location system control, and the first interface comprises an address input box;
the display module is configured to display a second interface in response to an operation on the location system control, wherein a plurality of addresses are displayed on the second interface; and
the sending module is configured to: in response to an operation on a first address in the plurality of addresses, display the first address in the address input box.

13. The electronic device according to any one of claims 8 to 11, wherein the system control comprises a location system control, and the first interface comprises an address input box;
the display module is configured to display a third interface in response to an operation on the location system control, wherein a map is displayed on the third interface; and
the sending module is configured to: in response to an operation on a first location on the map, display information about the first location in the address input box.

14. The electronic device according to any one of claims 8 to 13, wherein the first interface further comprises a second application control, and the electronic device further comprises an authorization module, wherein
the display module is configured to display an authorization interface in response to an operation on the second application control, wherein the authorization interface comprises authorization information and a confirmation control; and
the authorization module is configured to: in response to an operation on the confirmation control, grant permission corresponding to the authorization information to the application.

15. An electronic device, wherein the electronic device comprises one or more processors and a memory, the memory stores code, and when the code is executed by the processor, the electronic device is enabled to perform the method according to any one of claims 1 to 7.

16. A computer-readable storage medium, comprising computer instructions, wherein when the computer instructions are run on an electronic device, the electronic device is enabled to perform the method according to any one of claims 1 to 7.
